# EUROPEAN PATENT APPLICATION

(11) **EP 4 803 666 A1**
(43) Date of publication of application: **09.09.2026**
(21) Application number: 26162427.4
(22) Date of filing: 04.03.2026
(51) Int. Cl.: C25B 1/04, C25B 15/08

(54) **HYDROGEN PRODUCTION SYSTEM WITH AUTOMATIC ELECTROLYTE SUBSTITUTION AND RELATED METHOD OF AUTOMATIC ELECTROLYTE SUBSTITUTION**

(30) Priority: 05.03.2025 IT 202500004542
(71) Applicant: Hybitat S.r.l., 20122 Milano (IT)
(72) Inventor: Barduca, Loris, 20122 Milano (IT); Giacomelli, Massimo, 20122 Milano (IT)
(74) Representative: Caruti, Filippo

(57) **Abstract**

The present invention relates to a hydrogen production system (1). The system (1) comprises an electrolyser (10), equipped with an internal tank (101), adapted to produce hydrogen from the electrolysis of water, and a water distribution pipe (62) adapted to connect the internal tank (101) of the electrolyser (10) to a water source (50).

Advantageously, the system also comprises an electrolyte tank (20) adapted to contain a quantity of electrolyte equal to or greater than the quantity of electrolyte contained by the internal tank (101) of the electrolyser (10), and a waste tank (30) adapted to contain a quantity of fluid greater than the quantity of electrolyte contained by the internal tank (101) of the electrolyser (10). Furthermore, the system comprises an electrolyte distribution pipe (63) adapted to connect the internal tank (101) of the electrolyser (10) to the electrolyte tank (20), a drain pipe (64) adapted to connect the internal tank (101) of the electrolyser (10) to the waste tank (30), and a water control valve (71) adapted to regulate the flow of fluid in the water distribution pipe (62), an electrolyte control valve (72) adapted to regulate the flow of fluid in the electrolyte distribution pipe (63), and a control valve (73) adapted to regulate the flow of fluid in the drain pipe (64). Finally, the system comprises a control unit (40) connected to the electrolyser (10) and the valves (71-73) to control its operation. In particular, the electrolyser (10) measures at least one operating voltage of the electrolyser (10) and generates at least one electrolyte exhaustion signal based on the at least one measured operating voltage by the electrolyser (10). In addition, the control unit (40):
determines an exhaustion of the electrolyte contained in the internal tank (101) as a function of the electrolyte exhaustion signal,
forces the electrolyser (10) into a maintenance state,
imposes the emptying of the internal tank (101) of the electrolyser (10), by opening the opening of the drain valve (73) for a first drain time,
introduces a quantity of rinse water into the internal tank (101) of the electrolyser (10), by commanding the opening of the water control valve (71) for a rinse time, collects the rinse water in the waste tank (30), by commanding the opening of the drain valve for a second drain time, and
fills the internal tank (101) of the electrolyser (10) with new electrolyte, by commanding the opening of the electrolyte control valve (72) for a supply time.

## Description

### TECHNICAL FIELD

The present invention relates to the energy sector. In particular, the present invention relates to a hydrogen production system adapted to perform a cooling, i.e. a replacement, of the electrolyte used by an electrolyser and a related method of cooling, i.e. a replacement, of the electrolyte.

### BACKGROUND

The storage of energy, in particular produced by intermittent sources (e.g., energy produced by photovoltaic, wind plants etc.), is a fundamental aspect of energy generation and dispensing systems and infrastructures. Among the energy storage technologies, the production of hydrogen by electrolysis offers a wide versatility, allowing hydrogen to be reused in fuel cells for the generation of electricity or allowing thermal plants to be powered by means of the direct combustion of hydrogen.

Electrolysis is performed by electrolysers. Among these, anion exchange membrane electrolysers (AEMEL) represent an emerging technology that combines some advantages of the alkaline and proton exchange membrane electrolysers. They use a polymeric membrane conductive to anions, mainly hydroxide ions (OH⁻), which separates the cathode from the anode. In detail, the alkaline electrolysers (AEMEL) contain a liquid electrolyte solution such as potassium hydroxide (KOH) and water or sodium hydroxide (NaOH) and water. When current is applied to the electrodes, the hydroxide ions (OH-) move through the electrolyte solution from the cathode to the anode of each cell. Hydrogen gas bubbles are generated at the cathode and oxygen gas is generated at the anode.

This technology can operate with less concentrated alkaline electrolytic solutions than the traditional alkaline electrolysers, or even with deionised water, reducing the risks of corrosion and simplifying management. The AEMEL electrolysers offer high conversion efficiency and reduce corrosion of the electrodes and system components. The AEMEL electrolysers operate at moderate pressures and temperatures, reducing the operating costs and improving system life. In addition, the AEMEL electrolysers can use simple to produce catalysts, helping to reduce overall production costs. They are suitable for small and medium scale applications, including decentralized hydrogen production systems integrated with renewable energy sources.

The characteristics of the AEMEL electrolysers are such as to make them particularly suitable for power-to-power energy storage systems for small plants for the residential or light commercial sector.

Compared to the storage systems based on lithium batteries, the advantage of hydrogen lies in its high energy density (and therefore the possibility of storing more energy in the same space). In addition, an energy storage based on hydrogen does not suffer from the "self-discharge" problem typical of lithium batteries.

One of the disadvantages of the AEMEL alkaline electrolysers is that the liquid electrolytic solution can deplete over time, requiring a maintenance intervention on the electrolyser to restore new electrolyte in the electrolyser, replacing the waste electrolyte. The state of the electrolyte must be monitored and its concentration maintained adequate to ensure the operation of the electrolyser. Consequently, the use of electrolysers entails considerable maintenance requirements and operating costs of an electrolyser, which are an obstacle to the effective implementation of plants equipped with an electrolyser, in particular, in small-medium companies and residential areas.

In the art, CN 117127215 describes an automatic alkaline integration device for an alkaline liquid circulation system of an electrolytic bath for hydrogen production. The device determines the alkalinity loss rate of the circulation system of the alkaline liquid at different circulation rates of the same, based on the operating data of the circulation system. The device acquires the circulation rate of the alkaline liquid in real time in the circulation system of the alkaline liquid of the electrolytic cell. Starting from the alkalinity loss rate and the real-time alkaline liquid circulation rate, the real-time alkalinity loss rate of the alkaline liquid circulation system of the electrolytic cell is obtained. Depending on the alkalinity loss rate in real time, the new alkaline liquid is added to the circulation system in real time.

The known solution considered requires a precise storage and dispensing system for the alkaline liquid used to control the concentration of the liquid in the electrolytic cell. Consequently, the known solution proposed by CN 117127215 requires the implementation of special sensors, circuits, firmware and/or software for pre-processing the signals produced by the sensors, hydraulic circuits for distributing the alkaline liquid, which significantly increase the complexity, sizes and cost of the electrolyser. In addition, the regulation of the system, the management of the alkaline liquid and the residues of the electrolytic bath require the intervention of qualified personnel.

CN 114606523 describes an automatic control system for a hydrogen production system. In particular, it describes how the volume of electrolyte is controlled in a post-treatment system comprising a liquid outlet branch and an integration pipe of the post-treatment system. The control system regulates the volume of the liquid in the system as a function of the number of electrolytic baths in operation. Furthermore, the electrolyte flow is adequate to the desired hydrogen production level.

The known solution proposed in CN 114606523 also requires the implementation of electronic and hydraulic systems that substantially increase the size complexity and construction cost of hydrogen generation plants. Similar to the previous example, the control system proposed by CN 114606523 required qualified personnel to regulate the operation of the system.

CN 114481214 provides a device and a method for automatic cleaning of an electrolytic bath and automatic preparation and addition of liquid. The device comprises a first circulation pump, a filter, an electrolyte preparation box, a second circulation pump and a control unit. The first circulation pump, the filter, the electrolyte preparation box and the second circulation pump are connected in sequence by pipings; the control unit is respectively in electrical connection with the first circulation pump, the electrolyte preparation box and the second circulation pump. The device described in CN 114481214 has a structure similar to the structure defined in the preamble of claim 1, but this structure does not in itself allow the limits found in the other known solutions discussed above to be overcome.

In conclusion, in the energy sector there is a need for electrolysers capable of effectively managing the chemical concentration of the electrolytic bath of an electrolyser in a simple and effective way.

### OBJECTS AND SUMMARY OF THE INVENTION

An object of the present invention is to overcome the drawbacks of the prior art.

In particular, it is an object of the present invention to provide a system of automatic replacement of the electrolyte in an electrolyser, preferably of the AEMEL (alkaline) type, used for the generation of hydrogen.

It is an object of the present invention to also provide an electrolyser and a power-to-power system equipped with an efficient, compact and economical automatic electrolyte replacement system.

Furthermore, it is an object of the present invention to provide a method for controlling a system of automatic replacement of the electrolyte in an electrolyser.

These and other objects of the present invention are achieved by means of a system incorporating the features of the annexed claims, which form an integral part of the present description.

According to a first aspect, the present invention is directed to a hydrogen production system. The system comprises an electrolyser, equipped with an internal tank, adapted to produce hydrogen from the electrolysis of water, and a water distribution pipe adapted to connect the internal tank of the electrolyser to a water source.

Advantageously, the system also comprises an electrolyte tank, adapted to contain a quantity of electrolyte equal to or greater than the quantity of electrolyte contained by the internal tank of the electrolyser, and a waste tank, adapted to contain a quantity of fluid greater than the quantity of electrolyte contained by the internal tank. In addition, the system comprises pipes for the distribution of water (towards the electrolyser), electrolyte (towards the electrolyser) and exhaust fluids (from the electrolyser). The flow of fluid through the pipes is regulated by a water control valve, an electrolyte control valve, and a control valve. Finally, the system comprises a control unit connected to the electrolyser and the valves to control its operation. In particular, the electrolyser measures at least one operating voltage of the electrolyser, and generates at least one electrolyte exhaustion signal based on the at least one measured operating voltage. In addition, the control unit:
determines an exhaustion of the electrolyte contained in the internal tank as a function of the electrolyte exhaustion signal,
forces the electrolyser into a maintenance state,
imposes the emptying of the internal tank of the electrolyser, by opening the drain valve for a first drain time,
introduces a quantity of rinse water into the internal tank of the electrolyser, by commanding the opening of the water control valve for a rinse time,
collects the rinse water in the waste tank, by commanding the opening of the drain valve for a second drain time, and
fills the internal tank of the electrolyser with new electrolyte, by commanding the opening of the electrolyte control valve for a supply time.

The system according to the present invention is able to operate for long periods, independently replacing the electrolyte if it is exhausted. This is particularly advantageous in medium-small solutions (e.g., hydrogen generation systems for the production of energy/heat for residential, tertiary and/or light industry units). In fact, the system according to the invention waives the need to monitor the state of the electrolyte and/or to perform frequent maintenances for the verification and replacement of the electrolyte as occurs in the solutions known in the art. For example, maintenance interventions can be limited to one per calendar year of operation and can be carried out at the same time as the verification and maintenance interventions already planned for medium-small hydrogen generation systems.

In one embodiment, the at least one electrolyte exhaustion signal comprises a logic signal generated by the electrolyser when the at least one measured operating voltage of the electrolyser reaches a predetermined exhaustion voltage value.

In one embodiment, the at least one electrolyte exhaustion signal comprises the at least one measured operating voltage of the electrolyser. The step of determining an exhaustion of the electrolyte contained in the internal tank provides that the control unit determines the exhaustion of the electrolyte as a function of an operating voltage value.

In one embodiment, the at least one electrolyte exhaustion signal comprises a logic signal generated by the electrolyser when a volt-ampere measurement of one or more electrolysis process parameters reaches a predetermined volt-ampere exhaustion value.

In one embodiment, the at least one electrolyte exhaustion signal comprises a volt-ampere measurement of one or more electrolysis process parameters. The step of determining an exhaustion of the electrolyte contained in the internal tank provides that the control unit determines the exhaustion of the electrolyte as a function of a volt-ampere measurement value.

Thanks to these operations, the system simply and effectively determines when the electrolyte needs to be replaced to ensure a reliable and efficient operation of the system. In particular, no sensors and circuits are used for the analysis of the fluid contained in the internal tank of the electrolyte.

In one embodiment, the first drain time has a duration calculated or predefined by the control unit such as to ensure the emptying of the internal tank of the electrolyser. Preferably, the duration of the first drain time is determined as a function of the volume of the internal tank and by a flow rate of the drain pipe.

In one embodiment, the rinse time has a duration calculated or predefined by the control unit such as to introduce a volume of rinse water that ensures a quantity of foreign bodies in the internal tank of the electrolyser below a maximum value. Preferably, the duration of the rinse time is determined as a function of the volume of the internal tank and by a flow rate of the water distribution pipe.

In one embodiment, the second drain time has a duration calculated or predefined by the control unit such as to ensure the emptying of the internal tank of the electrolyser. Preferably, the duration of the second drain time is determined as a function of the volume of rinse water introduced into the internal tank and by a flow rate of the drain pipe.

In one embodiment, the supply time has a duration calculated or predefined by the control unit such as to introduce a predetermined volume of electrolyte into the internal tank of the electrolyser. Preferably, the duration of the supply time is determined as a function of the volume of the internal tank and by the flow rate of the electrolyte distribution pipe.

These strategies for calculating the times for which the control unit keeps the valves open make it possible to obtain a correct replacement of the electrolyte in the internal tank of the electrolyte without requiring external interventions.

In one embodiment, the electrolyser generates an indication of full internal tank. The control unit determines the end of at least one of the rinse time and the supply time as a function of the indication of full internal tank generated by the electrolyser.

In this alternative, the times are determined dynamically, as a function of the quantity of fluid in the internal tank of the electrolyser.

In one embodiment, the electrolyte tank is removable and comprises coupling means adapted to mechanically couple to a terminal of the electrolyte distribution pipe, establishing a fluid communication between the electrolyte tank and the electrolyte distribution pipe.

The electrolyte tank may contain electrolyte in solution or electrolyte in powder.

A further aspect of the present invention relates to a method of replacing electrolyte in a hydrogen generation system. The system comprises an electrolyser, equipped with an internal tank adapted to produce hydrogen from the electrolysis of water, an electrolyte tank adapted to contain a quantity of electrolyte equal to or greater than the quantity of electrolyte contained by the internal tank of the electrolyser, a waste tank adapted to contain a quantity of fluid greater than the quantity of electrolyte contained by the internal tank of the electrolyser, and a plurality of pipes and control valves adapted to selectively connect the internal tank of the electrolyser to a water source or to the electrolyte tank.

The method provides that the control unit controls the valves to perform the steps of:
determining an exhaustion of the electrolyte contained in the internal tank,
forcing the electrolyser into a maintenance state,
emptying the content of the internal tank of the electrolyser into the waste tank, introducing a quantity of rinse water into the internal tank of the electrolyser, collecting the rinse water in the waste tank, and
filling the internal tank of the electrolyser with new electrolyte contained in the electrolyte tank. In particular, the step of determining an exhaustion of the electrolyte comprises receiving from the electrolyser at least one electrolyte exhaustion signal, and determining an exhaustion of the electrolyte contained in the internal tank as a function of the electrolyte exhaustion signal. Advantageously, the electrolyte exhaustion signal is calculated as a function of the measurement of at least one operating voltage value of the electrolyser.

In one embodiment, in the step of determining an exhaustion of the electrolyte contained in the internal tank the at least one electrolyte exhaustion signal comprises a logic signal generated by the electrolyser when an operating voltage of the electrolyser reaches a predetermined exhaustion voltage value.

In one embodiment, in the step of determining an exhaustion of the electrolyte contained in the internal tank, the at least one electrolyte exhaustion signal comprises an operating voltage signal of the electrolyser, and the exhaustion of the electrolyte contained in the internal tank is determined as a function of an operating voltage value.

Further features and purposes of the present invention will become more evident from the description below.

### BRIEF DESCRIPTION OF THE DRAWINGS

The invention will be described below with reference to some examples, provided for explanatory and non-limiting purposes, and illustrated in the annexed drawings. These drawings illustrate different aspects and embodiments of the present invention and reference numerals illustrating structures, components, materials and/or similar elements in different drawings are indicated by similar reference numerals, where appropriate.
Figure 1 is a block diagram of a hydrogen generation system equipped with an automatic electrolyte replacement system according to an embodiment of the present invention;
Figure 2 is a flowchart of a method of operation of the system according to an embodiment of the present invention;

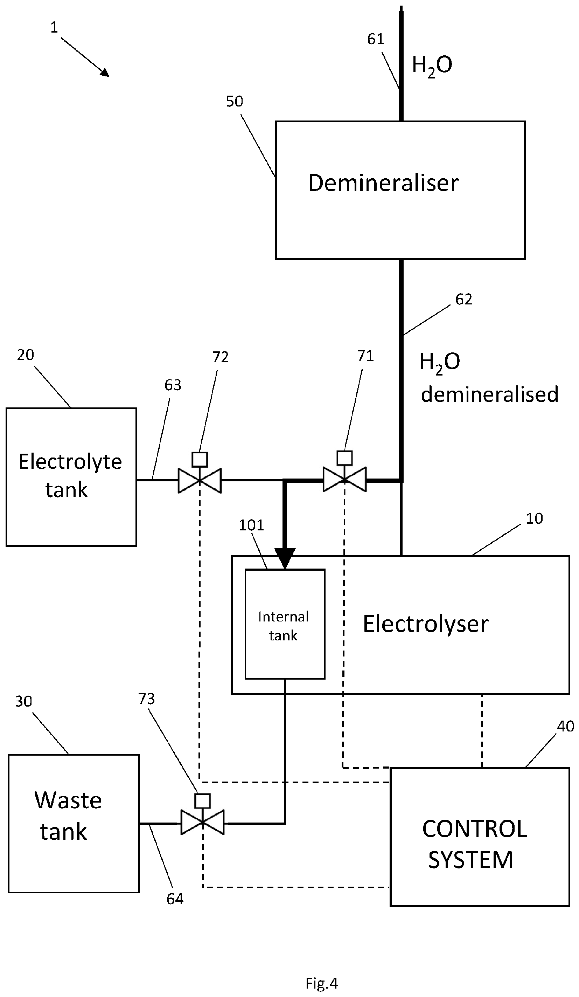

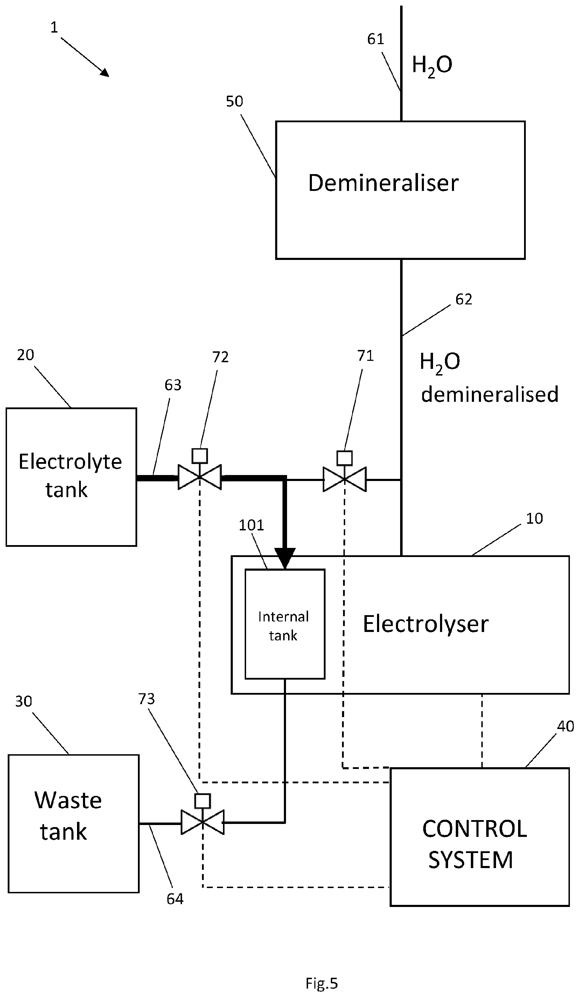

Figures 3-5 are block diagrams of the system of Figure 1, each of which highlights with an arrow the flow of liquids in the system during a corresponding step of the method of Figure 2.

### DETAILED DESCRIPTION OF THE INVENTION

Some preferred embodiments will be described in detail below, although the invention is susceptible to various alternative modifications. It must in any case be understood that there is no intention to limit the invention to the specific embodiment illustrated, but, on the contrary, the invention intends covering all the modifications and/or the use of equivalent elements or steps falling within the scope of the invention as defined in the claims.

Unless otherwise defined, all the terms of the art, notations and other scientific terms used herein are intended to have the meanings commonly understood by those who are skilled in the art to which this description pertains. In some cases, terms with commonly understood meanings are defined herein for the sake of clarity and/or for ease of reference; the inclusion of such definitions in the present description should thus not be interpreted as representing a substantial difference from what is generally understood in the art.

The terms "comprising", "having", "including" and "containing" are to be understood as open-ended terms (i.e. the meaning "comprising, but not limited to") and are to be considered as a support also for terms such as "consist essentially of", "consisting essentially of", "consist of" or "consisting of".

The use of "for example", "etc.", "or" indicates non-exclusive alternatives without limitation, unless otherwise indicated. The use of "includes" means "includes, but not limited to" unless otherwise indicated.

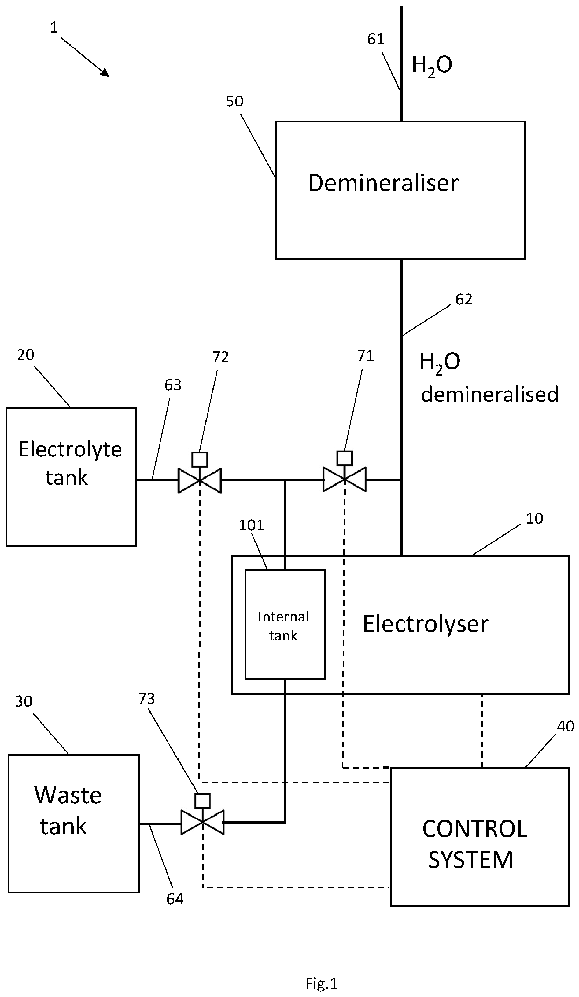

Referring to Figure 1, a hydrogen production system according to an embodiment of the present invention, or system 1 in short, comprises at least one electrolyser 10 - preferably an AEMEL (alkaline) type electrolyser - equipped with an internal electrolyte tank 101, a first tank, or electrolyte tank 20, a second tank, or waste tank 30. In particular, the electrolyte tank 20 is adapted to contain a liquid or solid state electrolyte of the type used by the electrolyser 10. Advantageously, the electrolyte tank 20 and the waste tank 30 have a volume equal to or, preferably, greater than the internal tank 101 of the electrolyser. Furthermore, the system 1 comprises a control unit 40 and, preferably, a demineraliser 50.

In particular, the control unit 40 comprises an electronic computer - e.g., one or more of a microprocessor, a microcontroller, a PLC, an ASIC, an FPGA, a DSP, a GPU, etc. -, memory units - e.g., of volatile and non-volatile type -, ancillary circuits - e.g., power circuitry, safety circuitry, etc. Optionally, the control system 40 comprises or is connected to sensors (e.g., temperature sensors, gas detectors, *etc.*)*.*

In the example considered, a first pipe 61 supplies water to the demineraliser 50. For example, the pipe is connected to a local water network adapted to serve the installation region of the system 1. A second pipe 62 connects an outlet of the demineraliser 50 to a demineralized water inlet of the electrolyser 10. Further, the second pipe 62 selectively connects the outlet of the demineraliser 50 to the internal tank 101 of the electrolyser 10 through a first valve, or water valve 71. A third pipe 63 selectively connects an outlet of the electrolyte tank 20 to the internal tank 101 of the electrolyser 10 through a second valve, or electrolyte valve 72. Optionally, the second pipe 62 and the third pipe 63 share a common portion downstream of the valves 71 and 72, between the latter and the internal tank 101. Finally, a fourth pipe 64 selectively connects an inlet of the waste tank 30 to an outlet of the internal tank 101 through a third valve, or drain valve 73.

In an exemplary embodiment (not illustrated), the system 1 comprises a pair of electrolysers 10. In the example considered, the electrolysers are Enapter EL 4.1 model electrolysers produced by Enapter S.r.l. The Enapter EL 4.1 electrolyser comprises an internal tank 10 with a capacity equal to 2 litres. The Applicant has determined that it is preferable to size the waste tank 30 to contain both the waste electrolyte and the rinse water. Accordingly, an adequate capacity for the waste tank 30 is 6 to 10 litres. Finally, the electrolyte tank 20 preferably has a capacity equal to about 5 litres, if it is used to supply two electrolysers 10.

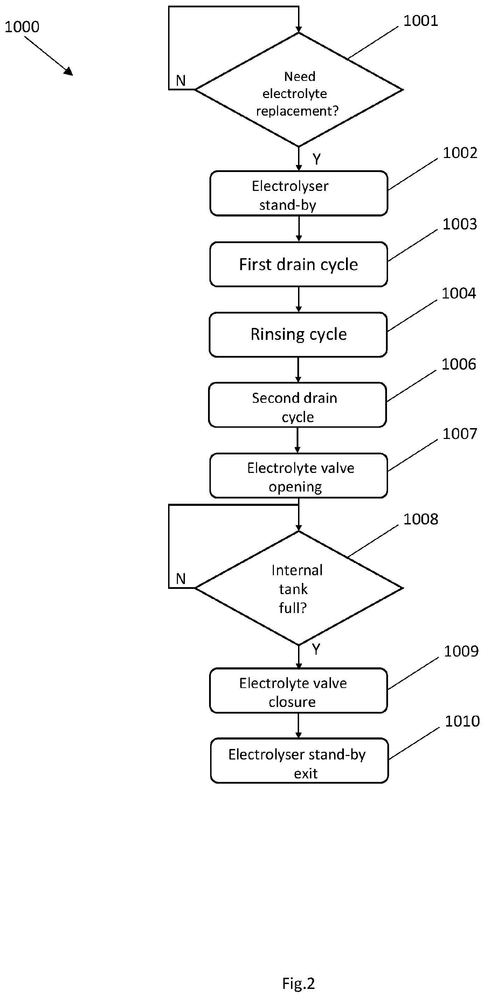

The control unit 40 is connected at least to the electrolyser 10 and to the valves 71, 72 and 73, for controlling the operation of the system 1 in accordance with a method of operation 1000 according to an embodiment of the present invention, of which Figure 2 is a flowchart.

In short, the method 1000 comprises determining the need to replace the electrolyte used in the internal tank 101 and, in this case, first carrying out an emptying and a rinsing of the internal tank 101, collecting the waste electrolyte and washing water in the waste tank 30 and, then, introducing demineralised water into the internal tank 101. Finally, the internal tank 101 is filled with a new electrolyte solution supplied by the electrolyte tank 20.

In more detail, the control unit remains waiting for an indication on the exhaustion of the electrolyte solution (decision step 1001 and branch N thereof). In a preferred embodiment, the electrolyser 10 is adapted to provide an electrolyte exhaustion indication. In one embodiment, the electrolyser 10 is configured to transmit an electrolyte exhaustion signal determined based on a volt-ampere measurement (i.e., an impedance measurement derived from a measure of an operating voltage and an operating current of the electrolyser) of one or more electrolysis process parameters (e.g., electrolyte resistivity determined by the volt-ampere measurement). For example, the electrolyser 10 provides the exhaustion signal when it determines the achievement of a threshold value of the one or more of the measured parameters, or of a parameter derived from the combination of the one or more parameters. Preferably, the electrolyte exhaustion signal may be a logic signal that assumes a predetermined logic value when the threshold value is reached.

Alternatively, the electrolyser 10 provides the volt-ampere measurement as the electrolyte exhaustion signal and the control unit 40 determines the need to replace the electrolyte. Still, it is possible to evaluate the quality of the electrolyte through a volt-ampere measurement as the time varies, carried out by the control unit 40, through values provided by the electrolyser 10 through a communication interface, e.g. modbus, which allows an exchange of data between one or more electronic components of the electrolyser 10 and the control unit 40. Non-limiting examples of information provided by the electrolyser comprise: a flow of hydrogen produced, a pressure in the internal tank 101 of the electrolyser 10, voltage and current to the electrolyser 10 (in particular, the stack thereof), the flow of electrolyte, the temperature of the electrolyte, the pressure of the water entering the electrolyser 10.

When it is necessary to proceed with the replacement of the electrolyte (outlet branch Y of step 1001), the control unit 40 forces the electrolyser 10 into "maintenance" mode (step 1002), that is, it imposes a state of inactivity (stand-by) that reduces energy consumption in which electrolysis is not performed, but which allows a rapid resumption of the operation.

The control unit 40 performs a first drain procedure (step 1003) of the internal tank 101. Preferably, the control unit 40 commands the opening of the drain valve 73 and its closure at the end of an opening time interval. As a result, the waste electrolyte is drained from the internal tank 101 of the electrolyser 10 to the waste tank 30. Preferably, the opening time interval of the drain valve 73 is selected so as to ensure complete emptying of the internal tank 101. Considering the numerical example above, the emptying or drain procedure is performed for an opening time interval equal to about 120 seconds, sufficient to ensure the emptying of the internal tanks of the two electrolysers 10 considered. Alternatively, the electrolyser 10 comprises an indicator of the level (not illustrated) of the electrolyte contained in the tank 101. For example, the level indicator provides an indication of a complete emptying of the internal tank 101.

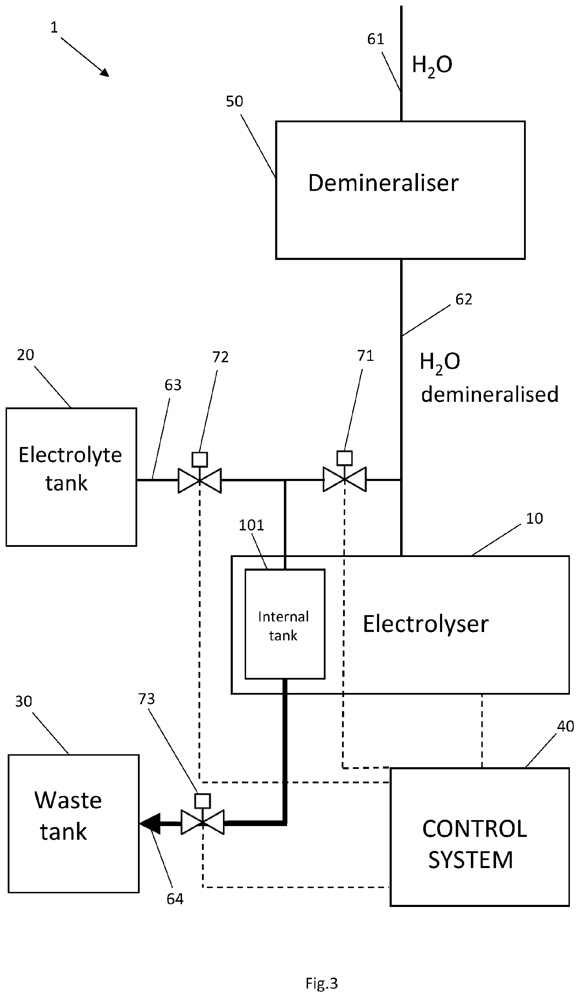

Subsequently, the control unit 40 commands execution of a rinsing procedure of the internal tank 101 of the electrolyser 10 (step 1004, Figure 3). Preferably, after closing the valve 73, the control unit 40 performs a rinsing process, by commanding the opening of the water valve 71 for a supply time. Preferably, the supply time interval is sized to introduce a quantity of water sufficient to remove residues from the internal tank 101 (e.g., impurities such as sediment, precipitate, etc.), at least up to reaching a minimum concentration thereof and/or based on indications provided by the level sensor present in the tank 101. For example, the supply interval is predefined as a function of the volume of the internal tank 101, the sizes of the second and fourth pipes 62 and 64, and head contributions determined by the specific structure of the system 1. At the end of the supply time interval, the rinsing process is concluded with the control unit 40 commanding the closure of the water valve 71. Considering the numerical example above, the rinse time interval has a duration comprised about between 2 and 10 seconds. In other words, a flow of demineralized water is introduced into the internal tank 101, which removes any impurities (e.g., sediments, precipitate, etc.) present in the internal tank 101 (and prevents them from damaging a stack of the electrolyser 10; that is, the set of the elements that allow electrolysis). The rinse water introduced into the internal tank 101 is removed from the latter by means of a second drain procedure (step 1006, corresponding to Figure 3 illustrating the first drain procedure), through which the rinse water is conveyed to the waste tank 30 through the fourth pipe 64. To this end, the control unit 40 commands the opening of the drain valve 73 for a rinse time interval, again depending on the sizes of the internal tank 101, the size of the fourth pipe and any head contributions defined by the specific structure of the system. In the numerical example considered, the rinse time interval has a duration equal to about 60 seconds. At the end of the rinse time interval, the control unit 40 commands the closure of the drain valve 73, upstream of the waste tank 30. At the end of the rinsing procedure, the internal tank 101 is completely emptied and substantially free of impurities.

Next, the control unit 40 performs a loading procedure of the internal tank 101 (steps 1007-1008). In particular, the control unit commands the opening of the electrolyte valve 72 downstream of the electrolyte tank 20 (step 1007). Accordingly, the electrolyte in the electrolyte tank 20 is introduced into the internal tank 101, preferably, until the internal tank 101 of the electrolyser 10 is filled.

In one embodiment, the electrolyser 10 is equipped with the aforementioned level sensor, which provides an indication of the quantity of fluid, i.e. the new electrolyte solution in the considered cycle, contained in the internal tank 101. For example, the level sensor is configured to signal a condition of full internal tank 101, which is provided to the control unit 40 (decision step 1008 and outlet branch N thereof). Alternatively, the control unit 40 is configured to interrupt the filling procedure of the internal tank 101 at the end of a predetermined loading time interval, for example as a function of the volume of the internal tank, the nominal flow rates of the second 62 and third 63 pipes, heads and/or an opening percentage of the valves 71 and 73.

When the control unit 40 receives the signal indicative of the filling condition of the internal tank (outlet branch Y of step 1008), it commands the closure of the electrolyte valve 72 (step 1009), ending the loading procedure of the internal tank 101. The internal tank 101 of the electrolyser 10 is thus filled with a new electrolyte solution, while the waste tank 30 houses the waste electrolyte diluted by the rinse water used after removal of the waste electrolyte.

Subsequently, the control unit 40 commands the exit of the electrolyser 10 from the "maintenance" mode, i.e. the resumption of normal operation (i.e., electrolysis, step 1010).

In this way, the electrolyser can completely refresh the electrolyte solution and resume its normal operation, without the need for specialised technical intervention.

As can be appreciated by the technician in the sector, the system according to the embodiment considered imposes maintenance interventions that are very far apart in time. For example, in the case of systems suitable for "light" residential and/or commercial solutions, the periodicity of the necessary maintenance is preferably annual or greater. In this case, the maintenance of the electrolyte can be carried out at the same time as an annual maintenance already normally planned for hydrogen generation/conversion plants of this type. This is advantageous in case the system is implemented in a hydrogen generation and storage plant for residential or commercial units. In addition, the maintenance operation is particularly simple and safe for the executor. In fact, the maintenance operation comprises emptying the waste tank and filling the electrolyte tank with new electrolyte, operations during which an operator does not interact /is not exposed, or interacts / is exposed for short periods of time to potentially hazardous substances.

In addition, the collection of waste electrolyte and rinse water in a single tank has the effect of diluting the waste electrolyte and thus reducing a capacity of the overall solution to deteriorate the tank or pose risks to users and operators.

However, it is clear that the above examples must not be interpreted in a limiting sense and the invention thus conceived is susceptible of numerous modifications and variations.

For example, the electrolyte tank is of a removable/interchangeable type. In this case, the present invention also comprises one or more disposable or reusable electrolyte tanks which are designed to be ready for use. In other words, the removable electrolyte tank comprises an opening adapted to be coupled to a corresponding terminal of the third pipe connecting the internal tank to the electrolyte tank. Opening and terminal comprise, but are not in a limiting way, at least one of corresponding threads, corresponding snap interlocking elements, or other similar systems. Advantageously, the mechanical coupling between the electrolyte tank and the third pipe automatically establishes a fluid communication between the electrolyte tank and the third pipe.

Optionally, the removable electrolyte tank comprises a one-way valve, or other flow control means, at the opening to ensure that the flow of fluid only occurs in output from the electrolyte tank. In addition or alternatively, the flow control means are adapted to allow a flow of fluid from the electrolyte tank only when the latter is connected to the third pipe.

As will be apparent to the person skilled in the art, one or more steps of the above-described method may be performed in parallel with each other or in an order different from the one presented above. Similarly, one or more optional steps can be added or removed from one or more of the procedures described above.

Still, in an alternative embodiment, the electrolyser is configured to provide an electrolyte exhaustion indication by means of a logic signal generated by the electrolyser when an operating voltage of the electrolyser reaches a predetermined exhaustion voltage value.

In another alternative embodiment, the electrolyser provides an electrolyte exhaustion indication by means of a signal indicative of a value or a trend of the operating voltage of the electrolyser. The step of determining an exhaustion of the electrolyte contained in the internal tank provides that the control unit determines the exhaustion of the electrolyte as a function of a predetermined operating voltage value.

Finally, nothing prevents the exhaustion signal generated by the electrolyser from depending on, or containing an impedance value of the electrolyte enclosed in the electrolyser.

Naturally, all the details can be replaced with other technically-equivalent elements.

In conclusion, the materials used, as well as the shapes and contingent dimensions of the devices, apparatus and terminals mentioned above, may be any according to the specific implementation needs without thereby departing from the scope of protection of the following claims. In particular, the materials with which tanks, pipes and other hydraulic elements are made can be of any type suitable for interacting with the electrolyte solution. In particular, the materials are chosen so that the components of the system do not undergo significant deterioration over the entire lifetime of the system or tanks. In particular, in the forms considered above, the electrolytic solution is an alkaline solution, therefore the system is made with materials that cannot be attacked by alkaline solutions.

## Claims

1. A hydrogen production system (1) comprising:
an electrolyser (10), equipped with an internal tank (101), adapted to produce hydrogen from the electrolysis of water, and
a water distribution pipe (62) adapted to connect the internal tank (101) of the electrolyser (10) to a water source (50),
further comprising:
an electrolyte tank (20) adapted to contain a quantity of electrolyte equal to or greater than the quantity of electrolyte contained by the internal tank (101) of the electrolyser (10),
a waste tank (30) adapted to contain a quantity of fluid greater than the quantity of electrolyte contained by the internal tank (101) of the electrolyser (10),
an electrolyte distribution pipe (63) adapted to connect the internal tank (101) of the electrolyser (10) to the electrolyte tank (20), and
a drain pipe (64) adapted to connect the internal tank (101) of the electrolyser (10) to the waste tank (30),
a water control valve (71) adapted to regulate the flow of fluid in the water distribution pipe (62),
an electrolyte control valve (72) adapted to regulate the flow of fluid in the electrolyte distribution pipe (63),
a control valve (73) adapted to regulate the flow of fluid in the drain pipe (64), and
a control unit (40) connected to the electrolyser (10) and the valves (71-73) to control its operation,
**characterized in that**
the electrolyser (10) measures at least one operating voltage of the electrolyser (10),
the electrolyser (10) generates at least one electrolyte exhaustion signal based on the at least one measured operating voltage of the electrolyser (10), and
**in that**
the control unit (40):
determines an exhaustion of the electrolyte contained in the internal tank (101) as a function of the electrolyte exhaustion signal,
forces the electrolyser (10) into a maintenance state,
imposes the emptying of the internal tank (101) of the electrolyser (10), by opening the opening of the drain valve (73) for a first drain time,
introduces a quantity of rinse water into the internal tank (101) of the electrolyser (10), by commanding the opening of the water control valve (71) for a rinse time, collects the rinse water in the waste tank (30), by commanding the opening of the drain valve for a second drain time, and
fills the internal tank (101) of the electrolyser (10) with new electrolyte, by commanding the opening of the electrolyte control valve (72) for a supply time.

2. System (1) according to claim 1, wherein the at least one electrolyte exhaustion signal comprises a logic signal generated by the electrolyser (10) when the at least one measured operating voltage of the electrolyser (10) reaches a predetermined exhaustion voltage value, and
wherein the step of determining an exhaustion of the electrolyte contained in the internal tank (101) provides that the control unit (40) determines the exhaustion of the electrolyte as a function of the logic signal generated by the electrolyser (10).

3. System (1) according to claim 1, wherein the at least one electrolyte exhaustion signal comprises the at least one measured operating voltage of the electrolyser (10), and
wherein the step of determining an exhaustion of the electrolyte contained in the internal tank (101) provides that the control unit (40) determines the exhaustion of the electrolyte as a function of an operating voltage value.

4. System (1) according to claim 1, wherein the at least one electrolyte exhaustion signal comprises a logic signal generated by the electrolyser (10) when a volt-ampere measurement of one or more electrolysis process parameters reaches a predetermined volt-ampere exhaustion value, and
wherein the step of determining an exhaustion of the electrolyte contained in the internal tank (101) provides that the control unit (40) determines the exhaustion of the electrolyte as a function of the logic signal generated by the electrolyser (10).

5. System (1) according to claim 1, wherein the at least one electrolyte exhaustion signal comprises a volt-ampere measurement of one or more electrolysis process parameters, and
wherein the step of determining an exhaustion of the electrolyte contained in the internal tank (101) provides that the control unit (40) determines the exhaustion of the electrolyte as a function of a volt-ampere measurement value.

6. System (1) according to any one of the preceding claims, wherein the first drain time has a duration calculated or predefined by the control unit (40) such as to ensure the emptying of the internal tank (101) of the electrolyser (10), wherein the duration of the first drain time is determined as a function of the volume of the internal tank (101) and by a flow rate of the drain pipe (64).

7. System (1) according to any one of the preceding claims, wherein the rinse time has a duration calculated or predefined by the control unit (40) such as to introduce a volume of rinse water that ensures a quantity of foreign bodies in the internal tank (101) of the electrolyser (10) below a maximum value, wherein the duration of the rinse time is determined as a function of the volume of the internal tank (101) and by a flow rate of the water distribution pipe (62).

8. System (1) according to any one of the preceding claims, wherein the second drain time has a duration calculated or predefined by the control unit (40) such as to ensure the emptying of the internal tank (101) of the electrolyser (10), wherein the duration of the second drain time is determined as a function of the volume of rinse water introduced into the internal tank (101) and by a flow rate of the drain pipe (64).

9. System (1) according to any one of the preceding claims, wherein the supply time has a duration calculated or predefined by the control unit (40) such as to introduce into the internal tank (101) of the electrolyser (10) a predetermined volume of electrolyte, wherein the duration of the supply time is determined as a function of the volume of the internal tank (101) and by the flow rate of the electrolyte distribution pipe (63).

10. System (1) according to any one of the preceding claims, wherein the electrolyser (10) generates an indication of full internal tank (101) and, wherein the control unit concludes the supply time as a function of the indication of full internal tank (101) generated by the electrolyser (10).

11. System (1) according to any one of the preceding claims, wherein the electrolyte tank (20) is removable and comprises coupling means adapted to mechanically couple to a terminal of the electrolyte distribution pipe (63), establishing a fluid communication between the electrolyte tank (20) and the electrolyte distribution pipe (63).

12. Method (1000) of replacing electrolyte in a hydrogen generation system (1) comprising an electrolyser (10), equipped with an internal tank (101), adapted to produce hydrogen from the electrolysis of water, an electrolyte tank (20) adapted to contain a quantity of electrolyte equal to or greater than the quantity of electrolyte contained by the internal tank (101) of the electrolyser (10), a waste tank (30) adapted to contain a quantity of fluid greater than the quantity of electrolyte contained by the internal tank (101) of the electrolyser (10), a plurality of pipes (61-64) and control valves (71-73) adapted to selectively connect the internal tank (101) of the electrolyser (10) to a water source (50), to the electrolyte tank, the method providing that the control unit (40) controls the valves by performing the steps of:
determining (1001) an exhaustion of the electrolyte contained in the internal tank (101),
forcing (1002) the electrolyser (10) into a maintenance state,
emptying (1003) the content of the internal tank (101) of the electrolyser (10) into the waste tank (30),
introducing (1004, 1005) a quantity of rinse water into the internal tank (101) of the electrolyser (10),
collecting (1003-1006) the rinse water in the waste tank (30), and
filling (1007-1009) the internal tank (101) of the electrolyser (10) with new electrolyte contained in the electrolyte tank (20),
**characterized in that**
the step of determining (1001) an exhaustion of the electrolyte comprises:
receiving from the electrolyser (10) at least one electrolyte exhaustion signal, which is calculated as a function of at least one measured operating voltage of the electrolyser (10), and
determining an exhaustion of the electrolyte contained in the internal tank (101) as a function of the electrolyte exhaustion signal.

13. Method (1000) according to claim 12, wherein in the step of determining (1001) an exhaustion of the electrolyte contained in the internal tank (101), the at least one electrolyte exhaustion signal comprises a logic signal generated by the electrolyser (10) when at least one measured operating voltage of the electrolyser (10) reaches a predetermined exhaustion voltage value.

14. Method (1000) according to claim 12, wherein in the step of determining (1001) an exhaustion of the electrolyte contained in the internal tank (101), the at least one electrolyte exhaustion signal comprises at least one operating voltage signal of the electrolyser (10), and the exhaustion of the electrolyte contained in the internal tank (101) is determined as a function of a value of the operating voltage.
